# EUROPEAN PATENT SPECIFICATION

(11) **EP 3 563 329 B1**
(45) Date of publication and mention of the grant of the patent: **09.02.2022**
(21) Application number: 18865957.7
(22) Date of filing: 13.12.2018
(51) Int. Cl.: H04L 9/32, G06F 21/64, H04L 29/06

(54) **OFF-CHAIN SMART CONTRACT SERVICE BASED ON TRUSTED EXECUTION ENVIRONMENT**
INTELLIGENTER OFF-CHAIN-VERTRAGSDIENST AUF DER BASIS EINER SICHEREN AUSFÜHRUNGSUMGEBUNG
SERVICE DE CONTRAT INTELLIGENT HORS REGISTRE DE CHAÎNE DE BLOCS ("OFF-CHAIN") REPOSANT SUR UN ENVIRONNEMENT D'EXÉCUTION DE CONFIANCE

(43) Date of publication of application: 06.11.2019
(73) Proprietor: Advanced New Technologies Co., Ltd., George Town, Grand Cayman KY1-9008 (KY)
(72) Inventor: SONG, Xuyang, Hangzhou, Zhejiang 311121 (CN); YAN, Ying, Hangzhou, Zhejiang 311121 (CN); QIU, Honglin, Hangzhou, Zhejiang 311121 (CN); ZHAO, Boran, Hangzhou, Zhejiang 311121 (CN); LIN, Li, Hangzhou, Zhejiang 311121 (CN)
(74) Representative: Fish & Richardson P.C.
(86) International application number: PCT/CN2018/120887
(87) International publication number: WO 2019/072297

(56) References cited:
- CN-A- 108 712 257
- CN-A- 108 898 390
- CN-A- 108 898 390
- US-A1- 2017 352 027
- US-A1- 2018 248 880
- US-B2- 10 108 954
- RAYMOND CHENG ET AL: "Ekiden: A Platform for Confidentiality-Preserving, Trustworthy, and Performant Smart Contract Execution", ARXIV.ORG, CORNELL UNIVERSITY LIBRARY, 201 OLIN LIBRARY CORNELL UNIVERSITY ITHACA, NY 14853, 14 April 2018 (2018-04-14), XP081240667,

## Description

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular user case. Examples of types of blockchain networks can include public blockchain networks, private blockchain networks, and consortium blockchain networks. A public blockchain network is open for all entities to use the DLS, and participate in the consensus process. A private blockchain network is provided for particular entity, which centrally controls read and write permissions. A consortium blockchain network is provided for a select group of entities, which control the consensus process, and includes an access control layer.

Blockchain is a decentralized and temper-proof distributed data storage technology. User data and contracts are logically operated and stored on the chain in a public manner. In many scenarios, users need to meet privacy protection requirements and do not want their data and logics to be leaked to unauthorized parties.

Although cryptography can be used to enhance privacy protection for some specific scenario designs, a more versatile and efficient solution is desired to solve existing privacy issues of the blockchain operations.

US 2017/0352027 describes an apparatus with a processing platform having at least one processing device. The processing platform implements a trusted bridge configured for at least temporary coupling between one or more data sources and a smart contract program of a blockchain. The trusted bridge comprises a secure enclave component and a relay component. Data obtained from a given one of the data sources via the relay component of the trusted bridge is authenticated in the secure enclave component of the trusted bridge. Information based at least in part on the data authenticated in the secure enclave component of the trusted bridge is provided to the smart contract program of the blockchain via the relay component of the trusted bridge. The secure enclave component receives a request for authenticated data from the blockchain smart contract program via the relay component, and responds to the request via the relay component.

RAYMOND CHENG ET AL: "Ekiden: A Platform for Confidentiality-Preserving, Trustworthy, and Performant Smart Contract Execution", ARXIV.ORG, CORNELL UNIVERSITY LIBRARY, 201 OLIN LIBRARY CORNELL UNIVERSITY ITHACA, NY 14853, 14 April 201; describes Ekiden, a system that combines blockchains with Trusted Execution Environments (TEEs). Ekiden leverages a novel architecture that separates consensus from execution, enabling efficient TEE-backed confidentiality-preserving smart contracts and high scalability.

### SUMMARY

The present invention is defined by the appended claims. Implementations of the present patent include computer-implemented methods for an off-chain smart contract service based on blockchain technologies (referred to as a blockchain off-chain smart contract service or, simply, a smart contract service). More particularly, implementations of the present patent are directed to providing an off-chain smart contract service capable of operating cross-chain data in a trusted execution environment (TEE).

In some implementations, actions include receiving, by a smart contract service provider including a trusted computation execution environment (TEE) from a client associated with a target blockchain network, a request for operating cross-chain data of one or more blockchain networks different from the target blockchain network, and the smart contract service provider is off the target blockchain network; sending, by the smart contract service provider to a data visiting service provider, a request for the cross-chain data; receiving, by the smart contract service provider, the cross-chain data from the data visiting service provider; generating, by the TEE, a result using the cross-chain data; and returning, by the smart contract service provider, the result to the client. Other implementations include corresponding systems, apparatus, and computer programs, configured to perform the actions of the methods, encoded on computer storage devices.

In some implementations, a non-transitory computer-readable storage medium is coupled to one or more computers and configured with instructions executable by the one or more computers to: receive, by a smart contract service provider comprising a trusted computation execution environment (TEE) from a client associated with a target blockchain network, a request for operating cross-chain data of one or more blockchain networks different from the target blockchain network, wherein the smart contract service provider is off the target blockchain network; send, by the smart contract service provider to a data visiting service provider, a request for the cross-chain data; receive, by the smart contract service provider, the cross-chain data from the data visiting service provider; generate, by the TEE, a result using the cross-chain data; and return, by the smart contract service provider, the result to the client.

In some implementations, a system for providing smart contract service includes an interface configured to receive, from a client associated with a target blockchain network, a request for operating cross-chain data of one or more blockchain networks different from the target blockchain network; wherein the system is off the target blockchain network; and a trusted computation execution environment (TEE), wherein the TEE includes one or more computers; and one or more computer-readable memories coupled to the one or more computers and configured with instructions executable by the one or more computers to: send a request for the cross-chain data to a data visiting service provider; receive the cross-chain data from the data visiting service provider; and generate a result using the cross-chain data; and wherein the interface configured to return the result to the client.

These and other implementations may each optionally include one or more of the following features:

A first feature, combinable with any of the following features, wherein the request for operating cross-chain data includes smart contract computational logics for operating the cross-chain data.

A second feature, combinable with any of the following features, wherein the smart contract computational logics for operating the cross-chain data are self-designed by the client.

A third feature, combinable with any of the following features, wherein the result is generated by the TEE executing the smart contract computational logics using the cross-chain data.

A fourth feature, combinable with any of the following features, further includes proving, by the smart contract service provider to the client, that the TEE includes a virtual machine operable to execute the smart contract computational logics in the request for operating cross-chain data.

A fifth feature, combinable with any of the following features, further includes prior to receiving a request for operating cross-chain data from the client, proving, by the smart contract service provider to the client, that the smart contract service provider includes the TEE.

A sixth feature, combinable with any of the following features, further includes proving, by the smart contract service provider to the data visiting service provider, that the smart contract service provider includes the TEE; and verifying, by the smart contract service provider, that the data visiting service provider includes a TEE

A seventh feature, combinable with any of the following features, further includes uploading, by the smart contract service provider, the result to the target blockchain network.

An eighth feature, combinable with any of the following features, further includes uploading the result to the target blockchain network, proving, by the smart contract service provider to the target blockchain network, that the smart contract service provider includes the TEE.

A ninth feature, combinable with any of the following features, wherein the smart contract service provider includes a cloud-based server.

A tenth feature, combinable with any of the following features, wherein the result is signed by the TEE using a private key.

An eleventh feature, combinable with any of the following features, wherein the cross-chain data are obtained from two or more blockchain networks.

In some implementations, actions include generating, by a client associated with a target blockchain network, a request for operating cross-chain data of one or more blockchain networks different from the target blockchain network, wherein the request for operating cross-chain data includes smart contract computational logics for operating the cross-chain data; sending, from the client, the request for operating cross-chain data to a smart contract service provider including a trusted computation execution environment (TEE), wherein the smart contract service provider is off the target blockchain network; and receiving, by the client, a result from the smart contract service provider, wherein the result is generated by the TEE using the cross-chain data obtained by the smart contract service provider. Other implementations include corresponding systems, apparatus, and computer programs, configured to perform the actions of the methods, encoded on computer storage devices.

In some implementations, a non-transitory computer-readable storage medium is coupled to one or more computers and configured with instructions executable by the one or more computers to generate, by a client associated with a target blockchain network, a request for operating cross-chain data of one or more blockchain networks different from the target blockchain network, wherein the request for operating cross-chain data includes smart contract computational logics for operating the cross-chain data; send, from the client, the request for operating cross-chain data to a smart contract service provider comprising a trusted computation execution environment (TEE), wherein the smart contract service provider is off the target blockchain network; and receive, by the client, a result from the smart contract service provider, wherein the result is generated by the TEE using the cross-chain data obtained by the smart contract service provider.

In some implementations, a system includes one or more computers; and one or more computer-readable memories coupled to the one or more computers and configured with instructions executable by the one or more computers to: generate, by a client associated with a target blockchain network, a request for operating cross-chain data of one or more blockchain networks different from the target blockchain network, wherein the request for operating cross-chain data includes smart contract computational logics for operating the cross-chain data; send, from the client, the request for operating cross-chain data to a smart contract service provider comprising a trusted computation execution environment (TEE), wherein the smart contract service provider is off the target blockchain network; and receive, by the client, a result from the smart contract service provider, wherein the result is generated by the TEE using the cross-chain data obtained by the smart contract service provider.

These and other implementations may each optionally include one or more of the following features:

A first feature, combinable with any of the following features, further includes sending, by the client, the received result to the target blockchain network.

A second feature, combinable with any of the following features, further includes prior to sending the request for operating cross-chain data to the smart contract service provider, verifying, by the client, that the smart contract service provider includes the TEE.

A third feature, combinable with any of the following features, further includes verifying, by the client, that the TEE includes a virtual machine operable to execute the smart contract computational logics in the request for operating the cross-chain data.

A fourth feature, combinable with any of the following features, further includes designing, by the client, the smart contract computational logics for operating the cross-chain data.

A fifth feature, combinable with any of the following features, wherein the client includes a software development kit (SDK).

A sixth feature, combinable with any of the following features, wherein the result is signed by the TEE using a private key, the method further including decrypting, by the client, the received result using a public key corresponding to the private key.

A seventh feature, combinable with any of the following features, further includes prior to sending the request for operating cross-chain data to the smart contract service provider, encrypting, by the client, the request for operating cross-chain data.

An eighth feature, combinable with any of the following features, wherein the cross-chain data are obtained from two or more blockchain networks.

The present patent also provides one or more non-transitory computer-readable storage media coupled to one or more processors and having instructions stored thereon which, when executed by the one or more processors, cause the one or more processors to perform operations in accordance with implementations of the methods provided herein.

The present patent further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

The described off-chain smart contract service provider is not coupled with any particular blockchain network, and thus the provided service is not limited to a specific form of a contract (e.g., configured for a particular blockchain network), but supports user-defined off-chain computations. In addition, the described off-chain smart contract service provider can support cross-chain data visits and allow mutually untrusted parties to run smart contracts over private data from one or more blockchain networks. The described techniques can achieve a few advantages. For example, using a TEE as an interim media to carry out the computations can protect the privacy of data. Further, off-loading the computational tasks from the blockchain network to the off-chain TEE can save computation time and resources of the blockchain network. In addition, because the user can self-design computational logics for the computations it needs and requests, the TEE executes the computations using these computational logics, and various computations can be performed in a more flexible way.

It is appreciated that methods in accordance with the present patent may include any combination of the aspects and features described herein. That is, methods in accordance with the present patent are not limited to the combinations of aspects and features specifically described herein, but also include any combination of the aspects and features provided.

The details of one or more implementations of the present patent are set forth in the accompanying drawings and the description below. Other features and advantages of the present patent will be apparent from the description and drawings, and from the claims.

### DESCRIPTION OF DRAWINGS

FIG. 1 depicts an example of an environment that can be used to execute implementations of the present patent.
FIG. 2 depicts an example of a conceptual architecture in accordance with implementations of the present patent.
FIG. 3 depicts an example of a process of providing cross-chain data service to a client in accordance with implementations of the present patent.
FIG. 4 depicts an example of a process that can be executed in accordance with implementations of the present patent.
FIG. 5 depicts an example of a diagram illustrating modules of a cross-chain data operation apparatus in accordance with implementations of the present patent.
FIG. 6 depicts an example of a diagram illustrating modules of another cross-chain data operation apparatus in accordance with implementations of the present patent.

Like reference symbols in the various drawings indicate like elements.

### DETAILED DESCRIPTION

Implementations of the present patent include computer-implemented methods for an off-chain smart contract service based on blockchain technologies (referred to as a blockchain off-chain smart contract service or, simply, a smart contract service). More particularly, implementations of the present patent are directed to providing an off-chain smart contract service capable of operating cross-chain data in a trusted execution environment.

To provide further context for implementations of the present patent, and as introduced above, distributed ledger systems (DLSs), which can also be referred to as consensus networks (e.g., made up of peer-to-peer nodes), and blockchain networks, enable participating entities to securely, and immutably conduct transactions, and store data. The term blockchain is used herein to generally refer to a DLS without reference to any particular use case.

A blockchain is a data structure that stores transactions in a way that the transactions are immutable, and can be subsequently verified. A blockchain includes one or more blocks. Each block in the chain is linked to a previous block immediately before it in the chain by including a cryptographic hash of the previous block. Each block also includes a timestamp, its own cryptographic hash, and one or more transactions. The transactions, which have already been verified by the nodes of the blockchain network, are hashed and encoded into a Merkle tree. A Merkle tree is a data structure in which data at the leaf nodes of the tree is hashed, and all hashes in each branch of the tree are concatenated at the root of the branch. This process continues up the tree to the root of the entire tree, which stores a hash that is representative of all data in the tree. A hash purporting to be of a transaction stored in the tree can be quickly verified by determining whether it is consistent with the structure of the tree.

Whereas a blockchain is a data structure for storing transactions, a blockchain network is a network of computing nodes that manage, update, and maintain one or more blockchains. As introduced above, a blockchain network can be provided as a public blockchain network, a private blockchain network, or a consortium blockchain network.

In a public blockchain network, the consensus process is controlled by nodes of the consensus network. For example, hundreds, thousands, even millions of entities can cooperate a public blockchain network, each of which operates at least one node in the public blockchain network. Accordingly, the public blockchain network can be considered a public network with respect to the participating entities. In some examples, a majority of entities (nodes) must sign every block in order for the block to be valid, and added to the blockchain (distributed ledger) of the blockchain network. Example public blockchain networks include particular peer-to-peer payment networks that leverage a distributed ledger, referred to as blockchain. As noted above, the term blockchain, however, is used to generally refer to distributed ledgers without particular reference to any particular blockchain network.

In general, a public blockchain network supports public transactions. A public transaction is shared with all of the nodes within the public blockchain network, and are stored in a global blockchain. A global blockchain is a blockchain that is replicated across all nodes. That is, all nodes are in perfect state consensus with respect to the global blockchain. To achieve consensus (e.g., agreement to the addition of a block to a blockchain), a consensus protocol is implemented within the public blockchain network. Examples of consensus protocols include, without limitation, proof-of-work (POW), proof-of-stake (POS), and proof-of-authority (POA). POW is referenced further herein as a non-limiting example.

In general, a private blockchain network private blockchain network is provided for a particular entity, which centrally controls read and write permissions. The entity controls, which nodes are able to participate in the blockchain network. Consequently, private blockchain networks are generally referred to as permissioned networks that place restrictions on who is allowed to participate in the network, and on their level of participation (e.g., only in certain transactions). Various types of access control mechanisms can be used (e.g., existing participants vote on adding new entities, a regulatory authority can control admission).

In general, a consortium blockchain network is private among the participating entities. In a consortium blockchain network, the consensus process is controlled by an authorized set of nodes, one or more nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network. Accordingly, the consortium blockchain network can be considered a private network with respect to the participating entities. In some examples, each entity (node) must sign every block in order for the block to be valid, and added to the blockchain. In some examples, at least a sub-set of entities (nodes) (e.g., at least 7 entities) must sign every block in order for the block to be valid, and added to the blockchain.

A blockchain is a tamper-proof, shared digital ledger that records transactions in a public or private peer-to-peer network. The ledger is distributed to all member nodes in the network, and the history of asset transactions occurring in the network is permanently recorded in the block. Prior to participating in a transaction, a node on the blockchain may need to execute computations using various techniques. Under current solutions, because each blockchain is independent, a node of one blockchain cannot communicate with other chains. For example, a node cannot read data from other blockchains or exchange data with other blockchains. In addition, even if a node does not need data from other blockchains to execute a computation, performing such computations entirely on a blockchain can consume a lot of time and computational resources of the blockchain, if it requires complicated computational logics and protocols.

Implementations of the present patent are described in further detail herein with reference to a consortium blockchain network, which is public among the participating entities. It is contemplated, however, that implementations of the present patent can be realized in any appropriate type of blockchain network.

Implementations of the present patent are described in further detail herein in view of the above context. More particularly, and as introduced above, implementations of the present patent are directed to providing an off-chain smart contract service capable of operating cross-chain data in a trusted execution environment.

Techniques for addressing these issues can include using an off-chain smart contract service for performing computation and operating cross-chain data. A smart contract can be a computer agreement designed to disseminate, verify, or enforce contracts in an informational manner. Smart contracts allow trusted transactions to be performed without a third-party involvement. These transactions are traceable and irreversible. A smart contract includes logics or computer programs that embody the agreements or rules of a transaction. For example, a smart contract can include logics that control the transfer of digital currencies or assets between parties under certain conditions. Smart contracts can be encoded in a programming language and deployed to the blockchain network runtime platform.

In some implementations, off-chain processing can be used for executing or enforcing smart contracts. For example, the logics included in the smart contract can be executed outside the boundaries of a blockchain network, for example, by an off-chain smart contract service provider, while still preserving the trust and transparency of a blockchain network. For example, an off-chain smart contract service provider can be an computer, server, or other types of data processing apparatus independent of a blockchain network. With off-chain processing, smart contract logics can be executed in a trusted execution environment (TEE) for preserving the trust and transparency of a blockchain network. The TEE can be used to execute logics in a smart contract and perform other operations and transactions included in the smart contract, outside of a blockchain network. The TEE can bind the code to the smart contract, and provide a number of services, such as identity verification, key management, cerographical service, and interactions with outside world. The trusted environment of TEE ensures that only authorized code is permitted to access data, and such protections are enforced throughout the execution of the code within it. In some implementations, the execution result of the smart contract returned by the off-chain smart contract service can be uploaded or otherwise transmitted to the blockchain network, for example, to update the state of the blockchain network. As such, the off-chain smart contract service provider can offload a computational load from the blockchain network and have more flexibility in performing different, complicated computational logics and protocols.

In some implementations, the described off-chain smart contract service provider is not coupled with any particular blockchain network, and thus the provided service is not limited to a specific form of a contract (e.g., configured for the particular blockchain network), but supports user-defined off-chain computations.

In addition, the described off-chain smart contract service provider can support cross-chain data visits and allow mutually untrusted parties to run smart contracts over private data from one or more blockchain networks. For example, a client of a blockchain network A can define a smart contract that operates on both the client's data from the blockchain network A but also data from a different blockchain network, blockchain network B. In some implementations, the client calls an off-chain contract service to execute its defined smart contract. The off-chain contract service can fetch the requested data from the blockchain network A and blockchain network B, execute the client-defined smart contract off the blockchain network A and blockchain network B to obtain a result, and then submits the result to the blockchain network A to update the states of the client.

Example techniques are described to make it possible and easier for a blockchain network node to execute complicated computations, and use data from one or more other blockchain networks to perform such computations. The example techniques can be based on a trusted execution environment (TEE). A TEE is a secure area on a host processor that guarantees the security, confidentiality, and integrity of the codes and data loaded into the environment. A TEE provides an isolated execution environment (e.g., using dedicated and isolated hardware) that has several security features, such as isolated execution, integrity of trusted applications, confidentiality of trusted data, and secure storage., The described off-chain smart contract service provider can include a TEE and implementing the blockchain network computation in the TEE. The described techniques can have a few advantages. For example, using a TEE as an interim media to carry out the computations can protect the privacy of data. For example, a user of blockchain network A needs data from blockchain network B and blockchain network C to perform a computation. Normally, each of blockchain network B and C is a closed chain and is not willing to share their data to the user of blockchain network A due to privacy concerns. By using the TEE, the computation can be performed without disclosing the detailed information of data from blockchain network B and C to blockchain network A but still realize the cross-chain data visit and the execution of the smart contract based on cross-chain data. Further, as previously described, performing complicated computations on a blockchain network costs computational resources of the chain. Off-loading the computational tasks from the blockchain network to the off-chain TEE can save computation time and resources of the blockchain network. In addition, because the user can self-design computational logics for the computations it needs and requests, the TEE executes the computations using these computational logics, and various computations can be performed in a more flexible and extensive way.

In some implementations, the proposed techniques can provide a universal smart contract service with privacy protection. For example, smart contracts used for financial transactions need to hide the transfer amount and parties (such as sender and payee) due to privacy concerns. Under the proposed approach, a sender can first encrypt the transaction content and call an off-chain smart contract service. The off-chain smart contract service can decrypt the transaction content in a TEE, execute the transaction in the TEE, and then return the transaction result to the chain in a form of ciphertext (e.g., with proof that the transaction is executed in the correct logics). After the blockchain network verifies the returned result, the result can be updated to reflect the latest state on the blockchain network.

In some implementations, the proposed techniques can provide cross-chain data computation service. As an example, the proposed techniques can be used for calculating personal credit scores. In practice, people need to participate in various services involving credit evaluation. For example, bank loan applications, real estate property rentals, and car rentals. Each service can be run and maintained by an independent consortium blockchain network or a private blockchain network. Each service may not want to share data to other services, and they may encrypt their possessed personal data in some cases. To obtain a person's comprehensive credit evaluation from different areas, the proposed solution can be used. In some implementations, the user can provide the credit computational logics (codes), data request authorization (e.g., using a signature or private key) to initiate a credit evaluation request using a private channel . The service in the proposed solution requests data from multiple chains and decrypts the data in a TEE, ensuring the result is generated under the correct calculation logics. The result and a certificate for the result are returned to the user, and the user can ensure the confidentiality and integrity of data and logics through proof of verification. The user can then use this result and proof to provide a certified personal credit score to other nodes on its blockchain network.

In some implementations, when a user needs to execute a transaction under a blockchain network contract, it can hand over the complicated calculations in the contract to the off-chain smart contract service in advance, and then upload and store the result in the blockchain network. In some implementations, the result can be directly used as an input to a transaction performed on the blockchain network, reducing the running time of the blockchain network contract and improving the efficiency. In such implementations, if the user does not want to expose private contracts or security protocols that are enforced on the blockchain network, the computation can be done using the off-chain smart contract service and data of the blockchain network can be accessed reliably.

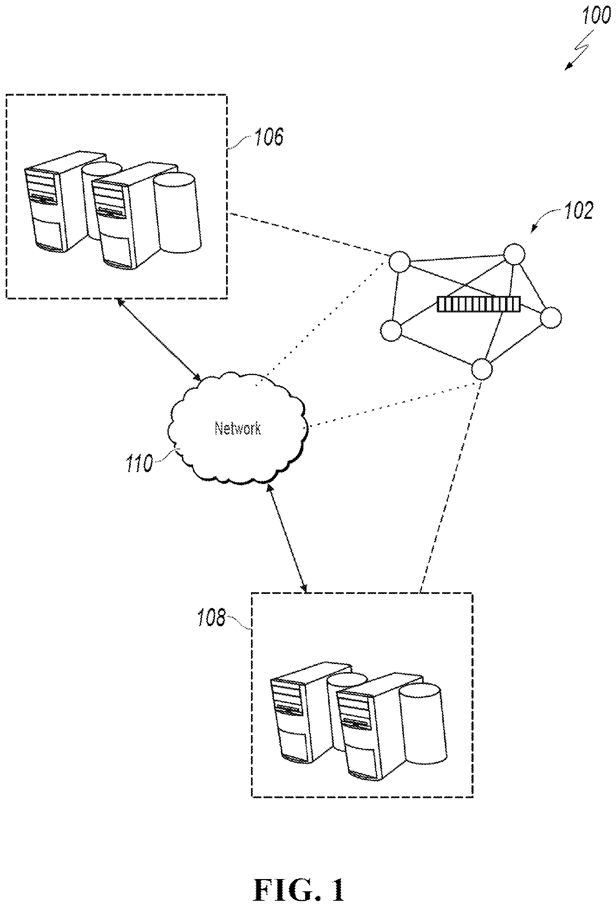

FIG. 1 depicts an example of an environment 100 that can be used to execute implementations of the present patent. In some examples, the environment 100 enables entities to participate in a blockchain network 102. The environment 100 includes computing devices 106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link. In some examples, the network 110 enables communication with, and within the blockchain network 102. In general the network 110 represents one or more communication networks. In some cases, the computing devices 106, 108 can be nodes of a cloud computing system (not shown), or can each computing device 106, 108 be a separate cloud computing system including a number of computers interconnected by a network and functioning as a distributed processing system.

In the depicted example, the computing systems 106, 108 can each include any appropriate computing system that enables participation as a node in the blockchain network 102. Examples of computing devices include, without limitation, a server, a desktop computer, a laptop computer, a tablet computing device, and a smartphone. In some examples, the computing systems 106, 108 hosts one or more computer-implemented services for interacting with the blockchain network 102. For example, the computing system 106 can host computer-implemented services of a first entity (e.g., Participant A), such as transaction management system that the first entity uses to manage its transactions with one or more other entities (e.g., other participants). The computing system 108 can host computer-implemented services of a second entity (e.g., Participant B), such as transaction management system that the second entity uses to manage its transactions with one or more other entities (e.g., other participants). In the example of FIG. 1, the blockchain network 102 is represented as a peer-to-peer network of nodes, and the computing systems 106, 108 provide nodes of the first entity, and second entity respectively, which participate in the blockchain network 102.

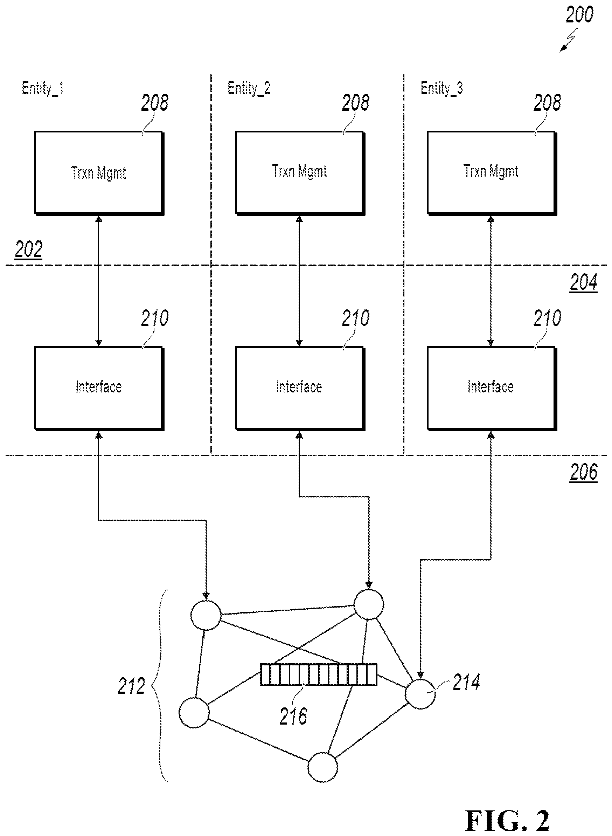

FIG. 2 depicts an example of a conceptual architecture 200 in accordance with implementations of the present patent. The example of a conceptual architecture 200 includes participant systems 202, 204, 206 that correspond to Participant A, Participant B, and Participant C, respectively. Each participant (e.g., user, enterprise) participates in a blockchain network 212 provided as a peer-to-peer network including a number of nodes 214, at least some of which immutably record information in a blockchain 216. Although a single blockchain 216 is schematically depicted within the blockchain network 212, multiple copies of the blockchain 216 are provided, and are maintained across the blockchain network 212, as described in further detail herein.

In the depicted example, each participant system 202, 204, 206 is provided by, or on behalf of Participant A, Participant B, and Participant C, respectively, and functions as a respective node 214 within the blockchain network. As used herein, a node generally refers to an individual system (e.g., computer, server) that is connected to the blockchain network 212, and enables a respective participant to participate in the blockchain network. In the example of FIG. 2, a participant corresponds to each node 214. It is contemplated, however, that a participant can operate multiple nodes 214 within the blockchain network 212, and/or multiple participants can share a node 214. In some examples, the participant systems 202, 204, 206 communicate with, or through the blockchain network 212 using a protocol (e.g., hypertext transfer protocol secure (HTTPS)), and/or using remote procedure calls (RPCs).

Nodes 214 can have varying degrees of participation within the blockchain network 212. For example, some nodes 214 can participate in the consensus process (e.g., as minder nodes that add blocks to the blockchain 216), while other nodes 214 do not participate in the consensus process. As another example, some nodes 214 store a complete copy of the blockchain 216, while other nodes 214 only store copies of portions of the blockchain 216. For example, data access privileges can limit the blockchain data that a respective participant stores within its respective system. In the example of FIG. 2, the participant systems 202, 204, 206 store respective, complete copies 216', 216", 216‴ of the blockchain 216.

A blockchain (e.g., the blockchain 216 of FIG. 2) is made up of a chain of blocks, each block storing data. Examples of data include transaction data representative of a transaction between two or more participants. While transactions are used herein by way of non-limiting example, it is contemplated that any appropriate data can be stored in a blockchain (e.g., documents, images, videos, audio). Examples of transactions can include, without limitation, exchanges of something of value (e.g., assets, products, services, and currency). The transaction data is immutably stored within the blockchain. That is, the transaction data cannot be changed.

Before storing in a block, the transaction data is hashed. Hashing is a process of transforming the transaction data (provided as string data) into a fixed-length hash value (also provided as string data). It is not possible to un-hash the hash value to obtain the transaction data. Hashing ensures that even a slight change in the transaction data results in a completely different hash value. Further, and as noted above, the hash value is of fixed length. That is, no matter the size of the transaction data the length of the hash value is fixed. Hashing includes processing the transaction data through a hash function to generate the hash value. An examples of hash function includes, without limitation, the secure hash algorithm (SHA)-256, which outputs 256-bit hash values.

Transaction data of multiple transactions are hashed and stored in a block. For example, hash values of two transactions are provided, and are themselves hashed to provide another hash. This process is repeated until, for all transactions to be stored in a block, a single hash value is provided. This hash value is referred to as a Merkle root hash, and is stored in a header of the block. A change in any of the transactions will result in change in its hash value, and ultimately, a change in the Merkle root hash.

Blocks are added to the blockchain through a consensus protocol. Multiple nodes within the blockchain network participate in the consensus protocol, and compete to have a block added to the blockchain. Such nodes are referred to as miners (or minder nodes). POW, introduced above, is used as a non-limiting example.

The miner nodes execute the consensus process to add transactions to the blockchain. Although multiple miner nodes participate in the consensus process, only one miner node can write the block to the blockchain. That is, the miner nodes compete in the consensus process to have their block added to the blockchain. In further detail, a miner node periodically collects pending transactions from a transaction pool (e.g., up to a predefined limit on the number of transactions that can be included in a block, if any). The transaction pool includes transaction messages from participants in the blockchain network. The miner node constructs a block, and adds the transactions to the block. Before adding the transactions to the block, the miner node checks whether any of the transactions are already included in a block of the blockchain. If a transaction is already included in another block, the transaction is discarded.

The miner node generates a block header, hashes all of the transactions in the block, and combines the hash value in pairs to generate further hash values until a single hash value is provided for all transactions in the block (the Merkle root hash). This hash is added to the block header. The miner also determines the hash value of the most recent block in the blockchain (i.e., the last block added to the blockchain). The miner node also adds a nonce value, and a timestamp to the block header. In a mining process, the miner node attempts to find a hash value that meets required parameters. The miner node keeps changing the nonce value until finding a hash value that meets the required parameters.

Every miner in the blockchain network attempts to find a hash value that meets the required parameters, and, in this way, compete with one another. Eventually, one of the miner nodes finds a hash value that meets the required parameters, and advertises this to all other miner nodes in the blockchain network. The other miner nodes verify the hash value, and if determined to be correct, verifies each transaction in the block, accepts the block, and appends the block to their copy of the blockchain. In this manner, a global state of the blockchain is consistent across all miner nodes within the blockchain network. The above-described process is the POW consensus protocol.

A non-limiting example is provided with reference to FIG. 2. In this example, Participant A wants to send an amount of fund to Participant B. Participant A generates a transaction message (e.g., including From, To, and Value fields), and sends the transaction message to the blockchain network, which adds the transaction message to a transaction pool. Each miner node in the blockchain network creates a block, and takes all transactions from the transaction pool (e.g., up to a predefined limit on the number of transaction that can be added to a block, if any), and adds the transactions to the block. In this manner the transaction published by Participant A is added to the blocks of the miner nodes.

In some blockchain networks, cryptography is implemented to maintain privacy of transactions. For example, if two nodes want to keep a transaction private, such that other nodes in the blockchain network cannot discern details of the transaction, the nodes can encrypt the transaction data. Examples of cryptographic methods include, without limitation, symmetric encryption, and asymmetric encryption. Symmetric encryption refers to an encryption process that uses a single key for both encryption (generating ciphertext from plaintext), and decryption (generating plaintext from ciphertext). In symmetric encryption, the same key is available to multiple nodes, so each node can en-/de-crypt transaction data.

Asymmetric encryption uses keys pairs that each include a private key, and a public key, the private key being known only to a respective node, and the public key being known to any or all other nodes in the blockchain network. A node can use the public key of another node to encrypt data, and the encrypted data can be decrypted using other node's private key. For example, and referring again to FIG. 2, Participant A can use Participant B's public key to encrypt data, and send the encrypted data to Participant B. Participant B can use its private key to decrypt the encrypted data (ciphertext) and extract the original data (plaintext). Messages encrypted with a node's public key can only be decrypted using the node's private key.

Asymmetric encryption is used to provide digital signatures, which enables participants in a transaction to confirm other participants in the transaction, as well as the validity of the transaction. For example, a node can digitally sign a message, and another node can confirm that the message was sent by the node based on the digital signature of Participant A. Digital signatures can also be used to ensure that messages are not tampered with in transit. For example, and again referencing FIG. 2, Participant A is to send a message to Participant B. Participant A generates a hash of the message, and then, using its private key, encrypts the hash to provide a digital signature as the encrypted hash. Participant A appends the digital signature to the message, and sends the message with digital signature to Participant B. Participant B decrypts the digital signature using the public key of Participant A, and extracts the hash. Participant B hashes the message and compares the hashes. If the hashes are same, Participant B can confirm that the message was indeed from Participant A, and was not tampered with.

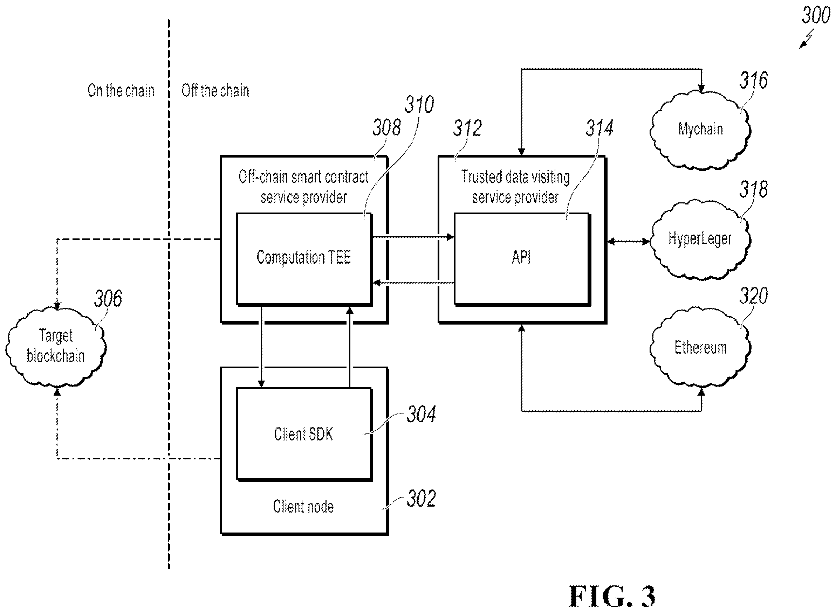

FIG. 3 depicts an example of a process 300 of providing cross-chain data service to a client in accordance with implementations of the present patent. In some implementations, a client 302 represents an application (e.g., a client application) in connection with a blockchain network such as a target blockchain network 306. For example, the client 302 can include a client software development kit (SDK) for accessing and communicating with the blockchain network 306. The client 302 can be installed on a device (also referred to as a client terminal or a node) of a user (not shown in FIG. 3). In some implementations, the user can participate in a transaction of the target blockchain network 306 by initiating the transaction using the client 302. In some implementations, account information of the user can be stored on the target blockchain network 306 and the user has authorization to perform transactions on the target blockchain network. The client 302 can access and read data stored on the target blockchain network 306. In some implementations, to obtain cross-chain data, e.g., data from one or more different blockchain networks (e.g., 316, 328 and 320 in FIG. 3, the client 302 may need a relay or trusted data visiting service provider 312 to bridge communication gap between the client 302 of the target blockchain network 306 and the other different blockchain networks.

In some implementations, the client 302 can initiate a confidential transaction under a contract of the target blockchain network, and such transaction information is only viewable to the user of client 302 and possibly other participants or parties of the transaction, but not any other parties on or off the blockchain network. In some implementations, client 302 needs to present a result to another entity on or off the target blockchain network 306.

In some implementations, a transaction of the client 302 of the target blockchain network 316 may include various computational operations using data from the target blockchain network 316, the cross-chain data (e.g., data from one or more different blockchain networks 316, 318, or 320), or both. In some implementations, a transaction of the client 302 of the target blockchain network 316 may include a result computed using data from the target blockchain network 316, the cross-chain data, or both. In some implementations, the transaction can include various computational logics and protocols. In some implementations, the computation can be complicated and consumes computational resources of the blockchain network. In some implementations, the transaction can be specified in a smart contract designed by the client 302.

For example, as shown in FIG. 3, the client 302 can, for example, using the client SDK 304, to prepare a smart contract that includes self-designed computational logics and protocols to perform a transaction based on cross-chain data (e.g., data from one or more different blockchain networks 316, 318, or 320). The client 302 can send the smart contract to a smart contract service provider 308 for execution. The smart contract service provider 308 is off the target blockchain network 306 so that the smart contract service provider 308 can perform the computational logics and protocols as defined in the smart contract independently of the target blockchain network 306.

Upon receiving and analyzing the smart contract, the smart contract service provider 308 determines that cross-chain data is needed for executing the smart contract. The smart contract service provider 308 can send a request for cross-chain data to a trusted data visiting service provider 312 to obtain data from the for cross-chain data. For example, the client 302 may want to perform a calculation of "a plus b", where a is data from the target blockchain network 306, and b is private data from the blockchain network 316. In this case, the smart contract sent from the client 302 contains the computational logic to add a and b together and locations indicator of data a and b. The smart contract service provider 308 can send a request to a trusted data visiting service provider 312 to obtain for the private data b of the blockchain network 316. In some implementations, the smart contract can be encrypted to protect the privacy of the user.

In some implementations, the off-chain smart contract service provider 308 can be a cloud-based server provider. In some implementations, such a cloud-server provider can be an independent third-party service provider, such as Alibaba^{®}. In some implementations, multiple entities are the data resources of the cross-chain data, and neither of them wants to upload their own data to a third-party service provider. In such cases, these entities can build a smart contract service provider themselves.

The off-chain smart contract service provider 308 includes a trusted computation execution environment (TEE) 310, which provides a secure computation execution environment. In some implementations, the computation TEE 310 is an independent hardware module whose independency ensures the security of data executed inside the TEE 310. In some implementations, to configure the TEE 310 for blockchain network operations, one or more of a virtual machine, an application interface, or an operating system may be programed, hard coded, or otherwise configured into the TEE 310 so as to make the TEE 310 suitable for execute computational logic defined in a smart contract. In some implementations, before sending the smart contract to the off-chain smart contract service provider 308, the client 302 may verify that the off-chain smart contract service provider 308 includes an TEE 310, and the TEE 310 includes execution programs or environment that correspond to the client 302are For example, if the target blockchain network 306 is an Ethereum-based blockchain network and the SDK 304 of the client 302 is an Ethereum-based client SDK (e.g., using the Solidity language), the client 302 may verify whether the TEE 310 includes an Ethereum Virtual Machine (EVM) (e.g., that supports the Solidity language) for executing Ethereum-based computational logics before the client 302 sends a request for execution a smart contract to the off-chain smart contract service provider 308..

After receiving the request for execution a smart contract, if the request is encrypted, the TEE 310 first decrypts the request, parse the smart contract, and identify data needed for execution the smart contract. The TEE 310 can call the trusted data visiting service provider 312 to obtain the data from one or more different sources, for example, through the application program interface (API) 314 of the trusted data visiting service provider 312. The trusted data visiting service provider 312 be a trusted party that can retrieve private data of one or more different blockchain networks. The trusted data visiting service provider 312 can provide trusted data to the TEE 310 of the off-chain smart contract service provider 308 and ensure data privacy and accuracy.

In some implementations, the trusted data visiting service provider 312 can also contain a TEE, for example, to retrieve data from the correct locations from one or more different blockchain networks. In some implementations, the logics of TEE included in the trusted data visiting service provider 312 is simpler than those of the TEE 310 in the off-chain smart contract service provider 308 as the former is mainly used for data retrieval and does not need to perform computations on that retrieved data.

In some implementations, before the TEE 310 calls the API 314, a two-way verification process is carried out between the off-chain smart contract service provider 308 and the trusted data visiting service provider 312. In some implementations, during the verification process, each of them proves it has included a TEE to the other party.

In some implementations, the trusted data visiting service provider 312 can retrieve data from one or more different sources including one or more of a blockchain network, a blockchain network collaboration, or a blockchain network platform (collectively referred to as one or more blockchain networks). Examples blockchain networks are shown as Mychain 316, Hiperleger 318, and Ethereum 320 in FIG. 3. The obtained data is sent back to the TEE 310, which executes computational logics using the obtained data.

In some implementations, after a computation result is generated in the computation TEE 310, the TEE 310 signs the result with a private key to prove the integrity and accuracy of the result. In some implementations, the signature is a proof indicating the computation result is executed by the TEE 310 according to the computational logics included in the smart contract sent by the client 302. As such, the result can be trusted by other nodes of the target blockchain network 306.

In some implementations, the TEE 310 returns the result to the client 302. For example, the client 302 decrypts the result with a public key corresponding to the private key of the TEE 310. In some implementations, the client 302 uploads the result to the target blockchain network 306 so that the result can be used to update the state of the client 302 or as an input to a transaction of the target blockchain network 306. In some implementations, the client 302 may use the result for purposes not blockchain network related, such as, to calculate the average credit score of the user. For example, the user can obtain data information from different chains (each represents a service provider, such as a car rental, a bank loan, or a home rental), and use the data to calculate the user's average credit score. The user can present the result to a merchant without uploading the result to any blockchain network.

In some implementations, the TEE 310 can return the result directly to the target chain 306. In such implementations, prior to returning the result, the target blockchain network 306 may verify whether the off-chain smart contract service provider 308 includes the required TEE to establish trust between the off-chain smart contract service provider 308 and the target chain 306.

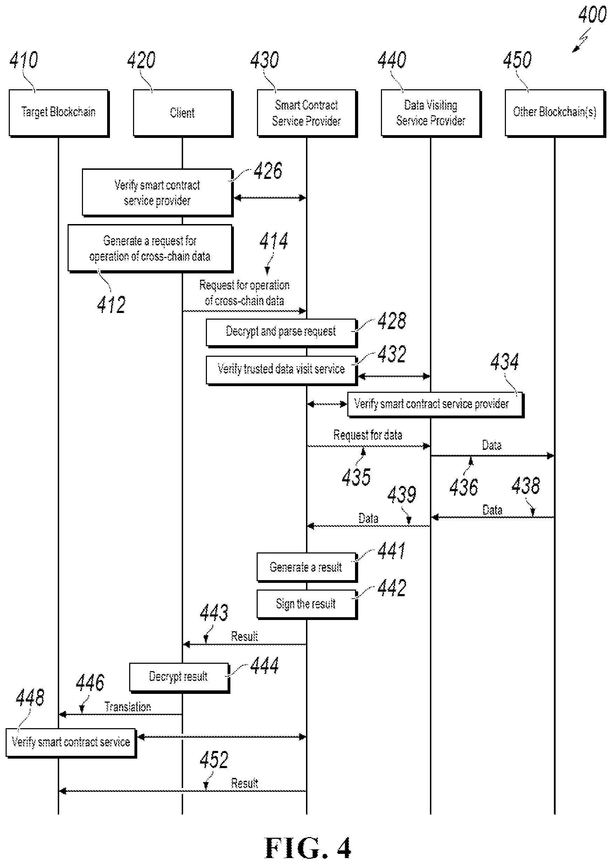

FIG. 4 depicts an example of a process 400 that can be executed in accordance with implementations of the present patent. In some implementations, the example process 400 may be performed using one or more computer-executable programs executed using one or more computing devices. For clarity of presentation, the description that follows generally describes method 400 in the context of the other figures in this description. For example, the client 420 can be the client 302, the smart contract service provider 430 can be the off-chain smart contract service provider 308, the trusted data visiting service provider 440 can be the trusted data visiting service provider 312, blockchain networks 450 can be Mychain 316, HyperLeger 318, and/or Ethereum 320, and target blockchain network 410 can be target blockchain network 306 as described with respect to FIG. 3. However, it will be understood that method 400 may be performed, for example, by any suitable system, environment, software, and hardware, or a combination of systems, environments, software, and hardware, as appropriate. In some implementations, various steps of method 400 can be run in parallel, in combination, in loops, or in any order.

At 412, a client 420 associated with a target blockchain network 410 generates a request for operating cross-chain data of one or more blockchain networks different from the target blockchain network. The request for operating cross-chain data includes smart contract computational logics for operating the cross-chain data. In some implementations, the request for operating cross-chain data can be written as a smart contract. The request for operating cross-chain data can be an example of the request for execution a smart contract as described with respect to FIG. 3.

In some implementations, the smart contract computational logics for operating the cross-chain data are self-designed by the client, allowing the user the freedom and flexibility to specify the smart contract computational logics to achieve the user's purposes, without being limited to computational logics defined by the target blockchain network 410. In such implementations, generating the request includes designing, by the client, the smart contract computational logics for operating the cross-chain data. In some implementations, the client includes a software development kit (SDK) that allows the user to write the smart contract computational logics. In some implementations, the computational logics can be written in Solidity language. In some implementations, the request for operating cross-chain data is encrypted by the client.

At 414, the client 420 associated with the target blockchain network 410 sends to a smart contract service provider 430 the request for operating cross-chain data of one or more blockchain networks different from the target blockchain network 410. The smart contract service provider 430 includes a trusted computation execution environment (TEE). The smart contract service provider 430 is off the target blockchain network 410. In some implementations, the cross-chain data are obtained from two or more blockchain networks. In some implementations, the smart contract service provider 430 includes a cloud-based server.

In some implementations, the request for cross-chain data visit is a data-visiting request. In such implementations, the TEE retrieves data and returns data to the client 420.

In some implementations, besides retrieving data from multiple blockchain networks, the TEE operates on the data based on smart contract computational logics included in the request. In some implementations, the smart contract service provider 430 can configured the TEE, for example, by embedding an EVM into the TEE, for the TEE to properly execute the smart contract computational logics included in the request.

In some implementations, prior to sending the request for operating cross-chain data, at 426, the client 420 verifies the smart contract service provider 430 that is capable for executing the smart contract computational logics in a secure manner. In some implementations, this verification process includes: the smart contract service provider 430 proves to the client 420 that the smart contract service provider 430 includes the TEE; and the smart contract service provider 430 proves to the client 420 that the TEE includes a virtual machine operable to execute the smart contract computational logics in the request for operating cross-chain data.

For example, the TEE can be Intel^{®} SGX. In this example, whether the smart contract service provider 430 includes the SGX is proved by a signature and verification service provided from Intel^{®}. In addition, to prove the TEE includes a required EVM, the TEE calculates a hash of the called script and codes the EVM and sends the hash to the client 420 for verification. Because the client 420 also has a set of completed EVM codes, it can also calculate a hash value of the script and the codes of the EVM it has, and compare whether the two hash values are consistent.

In some implementations, prior to generating the request, the client 420 and the smart contract service provider 430 can set up a pair of keys. Therefore, after the smart contract service provider 430 receives the request signed by one of the keys, it can decrypt the request by the other key from the pair. At 428, the smart contract service provider 430 decrypts and parses the received request. In some implementations, the request is written in a predefined data format during the development, and in such cases, the request is parsed by each data segment.

At 435, the smart contract service provider 430 sends a request for the cross-chain data to a data visiting service provider 440 to obtain the cross-chain data that is specified in the request for operating the cross-chain data. In some implementations, prior to sending the request to the data visiting service provider 440, at 432, the smart contract service provider 430 verifies that the trusted data visiting service provider 440 is capable of providing trusted cross-chain data of one or more blockchain networks different from the target blockchain network. In some implementations, this verification process includes that the smart contract service provider 430 verifies that the data visiting service provider 440 includes a TEE.

In some implementations, prior to sending the request to the data visiting service provider 440, at 434, the data visiting service provider 440 and the smart contract service provider 430 can perform a verification process to establish trust between the two. In some implementations, this verification process includes the smart contract service provider 430 to the data visit service provider 440 that the smart contract service provider 430 includes the TEE. In some implementations, in both steps of 432 and 434, verifying/proving the existence of TEE can be performed by the same method as recited in step 426.

At 436, the data visiting service provider 440 requests data from the one or more blockchain networks 450 different from the target blockchain network 410.

At 438, the data visiting service provider 440 receives data from the one or more blockchain networks 450 different from the target blockchain network 410.

At 439, the smart contract service provider 430 receives the cross-chain data from the data visiting service provider 440. In some implementations, the cross-chain data are obtained from two or more blockchain networks.

At 441, the TEE of the smart contract service provider 430 generates a result using the received cross-chain data by executing the smart contract computational logics. In some implementations, the result is generated by the TEE that executes the smart contract computational logics using the cross-chain data. In some implementations, the EVM includes in the TEE executes the code to perform computations using the computational logics and received data.

At 442, the smart contract service provider 430 signs the result. In some implementations, the result is signed by a private key. For example, the TEE includes a private key which is isolated from outside and other components of the TEE. In some implementations, the signature signed by the private key is a proof that the result is generated inside the TEE. In some implementations, after the smart contract service provider 430 signs the result, the final output result includes: the result generated by TEE and a hash value of the result signed by the private key.

At 443, the smart contract service provider 430 returns the result to the client 420.

At 444, the client 420 decrypts the received result. In some implementations, the client 420 decrypts the received result using a public key corresponding to the private key. In such implementations, the received result contains the result generated by TEE, and signed hash value of that result. In such implementations, the client 420 calculates a hash value of the result generated by TEE using the private key, and compares it with the signed hash value of that result to see if they are consistent.

At 446, the client 420 sends a transaction to the target blockchain network 410 based on the received result. In some implementations, the client 420 uploads the transaction to the target blockchain network 410 to update the state of the client 420 or perform a transaction on the target blockchain network 410.

In some implementations, at 452, the smart contract service provider 430 uploads the result to the target blockchain network 410. In some implementations, prior to uploading the result to the target blockchain network, at 448, the smart contract service provider proves to the target blockchain network, that the smart contract service provider includes the TEE. The method here used for verification can be the same as that used in step 426.

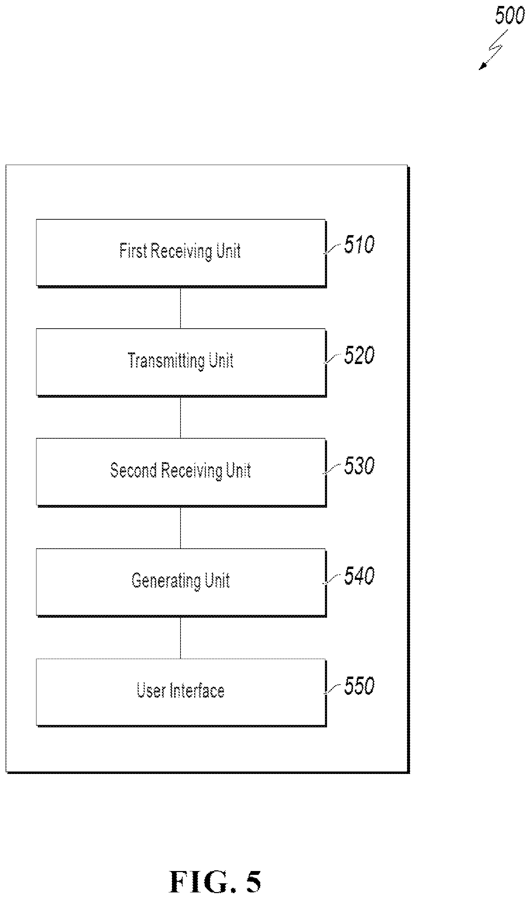

Referring to FIG. 5, FIG. 5 depicts an example of a diagram illustrating modules of an apparatus 500 in accordance with implementations of the present patent. The apparatus 500 can be an example implementation of a smart contract service provider including a trusted computation execution environment (TEE), wherein the smart contract service provider is off the target blockchain network. The apparatus 500 for cross-chain data operation can be used in an off-chain smart contract system based on a blockchain network technology. The apparatus 500 can correspond to the implementation shown in FIGS. 3 and 4, and the apparatus 500 includes the following: a first receiver or receiving unit 510, configured to receive, from a client associated with a target blockchain network, a request for operating cross-chain data of one or more blockchain networks different from the target blockchain network; a transmitter or transmitting unit 520, configured to send a request for the cross-chain data; a second receiver or receiving unit 530, configured to receive cross-chain data from the data visiting service provider; a generator or generating unit 540, configured to generate the cross-chain data from the data visiting service provider; and a user interface 550, configured to return the result to the client.

In an optional implementation, the request for operating cross-chain data includes smart contract computational logics for operating the cross-chain data.

In an optional implementation, the smart contract computational logics for operating the cross-chain data are self-designed by the client.

In an optional implementation, the apparatus 500 further includes the following: a first providing sub-unit, configured to provide that the TEE includes a virtual machine operable to execute the smart contract computational logics in the request for operating cross-chain data.

In an optional implementation, prior to receiving a request for operating cross-chain data from the client, the apparatus further includes the following: a second providing sub-unit, configured to provide that the smart contract service provider includes the TEE.

In an optional implementation, the apparatus 500 further includes the following: a third providing sub-unit, configured to provide that the smart contract service provider includes the TEE; and a verification sub-unit, configured to verify that the data visiting service provider includes a TEE.

In an optional implementation, the apparatus 500 further includes the following: an uploading sub-unit, configured to upload the result to the target blockchain network.

In an optional implementation, prior to uploading the result to the target blockchain network, the apparatus 500 further includes the following: a fourth providing sub-unit, configured to provide that the smart contract service provider includes the TEE.

In an optional implementation, the smart contract service provider includes a cloud-based server.

In an optional implementation, the cross-chain data are obtained from two or more blockchain networks.

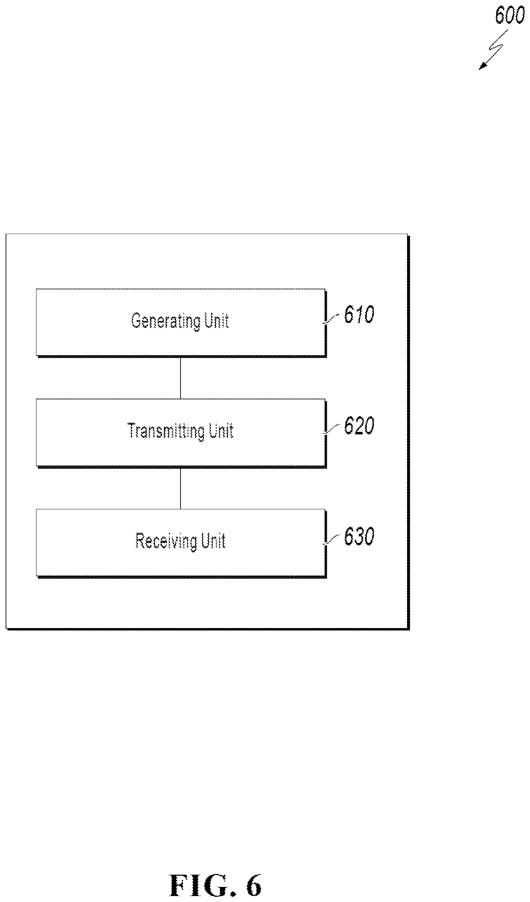

Referring to FIG. 6, FIG. 6 depicts an example of a diagram illustrating modules of another apparatus 600 in accordance with implementations of the present patent. The apparatus 600 can be an example implementation of a client associated with a target blockchain network. The apparatus 600 can be used in an off-chain smart contract system based on a blockchain network technology. The apparatus 600 can correspond to the implementation shown in FIGS. 3 and 4, and the apparatus 600 includes the following: a generator or generating unit 610, configured to generate a request for operating cross-chain data of one or more blockchain networks different from the target blockchain network, wherein the request for operating cross-chain data includes smart contract computational logics for operating the cross-chain data; a transmitter or transmitting unit 620, configured to send the request for operating cross-chain data to a smart contract service provider comprising a trusted computation execution environment (TEE), wherein the smart contract service provider is off the target blockchain network; and a receiver or receiving unit 630, configured to receive a result from the smart contract service provider, wherein the result is generated by the TEE using the cross-chain data obtained by the smart contract service provider.

In an optional implementation, the apparatus 600 further includes the following: a first transmitting sub-unit, configured to send the received result to the target blockchain network.

In an optional implementation, prior to sending the request for operating cross-chain data to the smart contract service provider, the apparatus 600 further includes the following: a verification sub-unit, configured to verify that the TEE includes a virtual machine operable to execute the smart contract computational logics in the request for operating the cross-chain data.

In an optional implementation, the apparatus 600 further includes the following: a designing sub-unit, configured to design the smart contract computational logics for operating the cross-chain data.

In an optional implementation, the client includes a software development kit (SDK).

In an optional implementation, the result is signed by the TEE using a private key, the apparatus 600 further includes the following: a decrypting sub-unit, configured to decrypt the received result using a public key corresponding to the private key.

In an optional implementation, prior to sending the request for operating cross-chain data to the smart contract service provider, the apparatus 600 further includes the following: an encrypting unit, configured to encrypt the request for operating cross-chain data.

In an optional implementation, the cross-chain data are obtained from two or more blockchain networks.

The system, apparatus, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an implementation process of functions and roles of each unit in the apparatus, references can be made to an implementation process of corresponding steps in the previous method. Details are omitted here for simplicity.

Because an apparatus implementation basically corresponds to a method implementation, for related parts, references can be made to related descriptions in the method implementation. The previously described apparatus implementation is merely an example. The units described as separate parts may or may not be physically separate, and parts displayed as units may or may not be physical units, may be located in one position, or may be distributed on a number of network units. Some or all of the modules can be selected based on actual demands to achieve the objectives of the solutions of the present patent. A person of ordinary skill in the art can understand and implement the implementations of the present application without creative efforts.

FIG. 5 is a schematic diagram illustrating an internal functional module and a structure of a cross-chain data operation apparatus. The cross-chain data operation apparatus can be an example of a smart contract service provider comprising a trusted computation execution environment (TEE). An execution body in essence can be an electronic device, and the electronic device includes the following: one or more processors; and a memory configured to store an executable instruction of the one or more processors.

The one or more processors are configured to receive, from a client associated with a target blockchain network, a request for operating cross-chain data of one or more blockchain networks different from the target blockchain network, wherein the smart contract service provider is off the target blockchain network; send to a data visiting service provider, a request for the cross-chain data; receive the cross-chain data from the data visiting service provider; generate, by the TEE, a result using the cross-chain data; and return the result to the client.

Optionally, the request for operating cross-chain data includes smart contract computational logics for operating the cross-chain data.

Optionally, the smart contract computational logics for operating the cross-chain data are self-designed by the client.

Optionally, the result is generated by the TEE executing the smart contract computational logics using the cross-chain data.

Optionally, the one or more processors are configured to prove to the client that the TEE include a virtual machine operable to execute the smart contract computational logics in the request for operating cross-chain data.

Optionally, prior to receiving a request for operating cross-chain data from the client, the one or more processors are configured to prove to the client that the smart contract service provider include the TEE.

Optionally, the one or more processors are configured to prove to the data visiting service provider that the smart contract service provider includes the TEE; and verify that the data visiting service provider includes a TEE.

Optionally, the one or more processors are configured to upload the result to the target blockchain network.

Optionally, prior to uploading the result to the target blockchain network, the one or more processors are configured to prove to the target blockchain network, that the smart contract service provider include the TEE.

Optionally, the smart contract service provider includes a cloud-based server.

Optionally, the result is signed by the TEE using a private key.

Optionally, the cross-chain data are obtained from two or more blockchain networks.

FIG. 6 is a schematic diagram illustrating an internal functional module and a structure of another cross-chain data operation apparatus. The another cross-chain data operation apparatus can be an example of a client associated with a target blockchain network. An execution body in essence can be an electronic device, and the electronic device includes the following: one or more processors; and a memory configured to store an executable instruction of the one or more processors.

The one or more processors are configured to generate a request for operating cross-chain data of one or more blockchain networks different from the target blockchain network, wherein the request for operating cross-chain data includes smart contract computational logics for operating the cross-chain data; send the request for operating cross-chain data to a smart contract service provider comprising a trusted computation execution environment (TEE), wherein the smart contract service provider is off the target blockchain network; and receive a result from the smart contract service provider, wherein the result is generated by the TEE using the cross-chain data obtained by the smart contract service provider.

Optionally, the one or more processors are configured to send the received result to the target blockchain network.

Optionally, prior to sending the request for operating cross-chain data to the smart contract service provider, the one or more processors are configured to verify that the smart contract service provider includes the TEE.

Optionally, the one or more processors are configured to verify that the TEE includes a virtual machine operable to execute the smart contract computational logics in the request for operating the cross-chain data.

Optionally, the client includes a software development kit (SDK).

Optionally, the result is signed by the TEE using a private key. The one or more processors are configured to decrypt the received result using a public key corresponding to the private key.

Optionally, prior to sending the request for operating cross-chain data to the smart contract service provider, the one or more processors are configured to encrypt the request for operating cross-chain data.

Optionally, the cross-chain data are obtained from two or more blockchain networks.

Implementations of the subject matter and the actions and operations described in the present patent can be implemented in digital electronic circuitry, in tangibly-embodied computer software or firmware, in computer hardware, including the structures disclosed in the present patent and their structural equivalents, or in combinations of one or more of them. Implementations of the subject matter described in the present patent can be implemented as one or more computer programs, e.g., one or more modules of computer program instructions, encoded on a computer program carrier, for execution by, or to control the operation of, data processing apparatus. The carrier may be a tangible non-transitory computer storage medium. Alternatively, or in addition, the carrier may be an artificially-generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application-specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

The processes and logic flows described in the present patent can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will be coupled to at least one non-transitory computer-readable storage medium (also referred to as a computer-readable memory). The storage medium coupled to the computer can be an internal component of the computer (e.g., an integrated hard drive) or an external component (e.g., universal serial bus (USB) hard drive or a storage system accessed over a network). Examples of storage media can include, for example, magnetic, magneto-optical, or optical disks, solid state drives, network storage resources such as cloud storage systems, or other types of storage media. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, implementations of the subject matter described in the present patent can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

The present patent uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While the present patent contains many specific implementation details, these should not be construed as limitations on the scope of what is being claimed, which is defined by the claims themselves, but rather as descriptions of features that may be specific to particular implementations. Certain features that are described in the present patent in the context of separate implementations can also be realized in combination in a single implementation. Conversely, various features that are described in the context of a single implementations can also be realized in multiple implementations separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (400) comprising:
generating, by a client (302, 420) associated with a target blockchain network (306, 410), a request for operating client data from the target blockchain network and cross-chain data of one or more blockchain networks (316, 318, 320) different from the target blockchain network, wherein the request for operating cross-chain data comprises one or more smart contract computational logics for operating the cross-chain data and wherein the client cannot read data from, and exchange data with, the one or more blockchain networks different from the target blockchain network;
sending, from the client, the request for operating cross-chain data to a smart contract service provider (308, 430) comprising a trusted computation execution environment TEE (310), wherein the smart contract service provider is off the target blockchain network;
receiving (414), by the smart contract service provider (308, 430), from the client (302, 420) associated with the target blockchain network (306, 410), the request for operating cross-chain data of one or more blockchain networks (316, 318, 320) different from the target blockchain network;
fetching by the smart contract service provider (308, 430), client data from the target blockchain;
sending (435), by the smart contract service provider to a data visiting service provider (312, 440), a request for the cross-chain data;
receiving (439), by the smart contract service provider, the cross-chain data from the data visiting service provider;
generating (441), by the TEE, a result using the client data and the cross-chain data, wherein the result is generated by the TEE executing the smart contract computational logics using the client data and the cross-chain data, independently of the target blockchain network; and
returning (443), by the smart contract service provider, the result to the client.

2. The computer-implemented method of claim 1, wherein the cross-chain data of the one or more blockchain networks (316, 318, 320) further comprise target cross-chain data (a) obtained from the target blockchain network (306, 410) and private cross-chain data (b) obtained from a private blockchain network (316).

3. The computer-implemented method of any one of claims 1 or 2, wherein the smart contract computational logics for operating the cross-chain data are self-designed by the client (302, 420).

4. The computer-implemented method of any one of claims 1 or 2, further comprising proving, by the smart contract service provider (308, 430) to the client (302, 420), that the TEE (310) comprises a virtual machine operable to execute the smart contract computational logics in the request for operating cross-chain data.

5. The computer-implemented method of claim 1, further comprising one or more of:
prior to receiving (414) the request for operating cross-chain data from the client (302, 420), proving, by the smart contract service provider (308, 430) to the client, that the smart contract service provider includes the TEE (310);
proving, by the smart contract service provider to the data visiting service provider, that the smart contract service provider includes the TEE, and verifying, by the smart contract service provider, that the data visiting service provider (312, 440) includes a TEE; and
uploading, by the smart contract service provider, the result to the target blockchain network (306, 410), and, prior to uploading the result to the target blockchain network, proving, by the smart contract service provider to the target blockchain network, that the smart contract service provider includes the TEE.

6. The computer-implemented method of claim 1, wherein
the result is signed by the TEE (310) using a private key; and/or
the cross-chain data are obtained from two or more blockchain networks (316, 318, 320).

7. The computer-implemented method of claim 6, wherein
the result is signed by the TEE (310) using a private key, the method further comprising decrypting, by the client, the received result using a public key corresponding to the private key.

8. The computer-implemented method of claim 1, further comprising:
prior to sending the request for operating cross-chain data to the smart contract service provider (308, 430), encrypting, by the client (302, 420), the request for operating cross-chain data.

9. A system comprising:
a client (302, 420) associated with a target blockchain network, comprising:
one or more computers; and
one or more computer-readable memories coupled to the one or more computers and configured with instructions executable by the one or more computers to:
generate, a request for operating client data from the target blockchain network and cross-chain data of one or more blockchain networks (316, 318, 320) different from the target blockchain network, wherein the request for operating cross-chain data comprises one or more smart-contract computational logics for operating the cross-chain data, and wherein the client cannot read data from, and exchange data with, the one or more blockchain networks different from the target blockchain network;
fetch by a smart contract service provider (308, 430), client data from the target blockchain;
send the request for operating cross-chain data to a smart contract service provider (308, 430) comprising a trusted computation execution environment (TEE, 310), wherein the smart contract service provider is off the target blockchain network;
an interface; and
a trusted computation execution environment (TEE, 310), wherein the TEE comprises:
one or more computers; and
one or more computer-readable memories coupled to the one or more computers and configured with instructions executable by the one or more computers to:
receive (414), from the client associated with the target blockchain network, the request for operating cross-chain data of one or more blockchain networks (316, 318, 320) different from the target blockchain network;
send (435) to a data visiting service provider (312, 440), a request for the cross-chain data;
receive (439), the cross-chain data from the data visiting service provider;
generate (441), a result using the client data and the cross-chain data, wherein the result is generated by the TEE executing the smart contract computational logics using the client data and the cross-chain data, independently of the target blockchain network; and
return (443), the result to the client.

## Patentansprüche

1. Computerimplementiertes Verfahren (400) umfassend:
Erzeugen, durch einen Client (302,420), der einem Ziel-Blockchain-Netzwerk (306, 410) zugeordnet ist, einer Anforderung zum Betreiben von Clientdaten von dem Ziel-Blockchain-Netzwerk und Cross-Chain-Daten von einem oder mehreren Blockchain-Netzwerken (316, 318, 320), die sich von dem Ziel-Blockchain-Netzwerk unterscheiden, wobei die Anforderung zum Betreiben von Cross-Chain-Daten eine oder mehrere Smart Contract-Berechnungslogiken zum Betreiben der Cross-Chain-Daten umfasst und wobei der Client keine Daten von dem einen oder den mehreren Blockchain-Netzwerken, die sich von dem Ziel-Blockchain-Netzwerk unterscheiden, lesen und mit diesen Daten austauschen kann;
Senden der Anforderung zum Betreiben von Cross-Chain-Daten von dem Client an einen Smart Contract-Dienstanbieter (308, 430), der eine vertrauenswürdige Berechnungsausführungsumgebung TEE (310) umfasst, wobei der Smart Contract-Dienstanbieter außerhalb des Ziel-Blockchain-Netzwerks ist;
Empfangen (414) der Anforderung zum Betreiben von Cross-Chain-Daten eines oder mehrerer Blockchain-Netzwerke (316, 318, 320), die sich von dem Ziel-Blockchain-Netzwerk unterscheiden, durch den Smart Contract-Dienstanbieter (308, 430) von dem Client (302, 420), der dem Ziel-Blockchain-Netzwerk (306, 410) zugeordnet ist;
Abrufen von Clientdaten von der Ziel-Blockchain durch den Smart Contract-Dienstanbieter (308, 430);
Senden (435) einer Anforderung für die Cross-Chain-Daten durch den Smart Contract-Dienstanbieter an einen Datenbesuchs-Dienstanbieter (312, 440);
Empfangen (439) der Cross-Chain-Daten vom Datenbesuchs-Dienstanbieter durch den Smart Contract-Dienstanbieter;
Erzeugen (441) eines Ergebnisses durch die TEE unter Verwendung der Clientdaten und der Cross-Chain-Daten, wobei das Ergebnis durch die TEE erzeugt wird, die die Smart Contract-Rechenlogik unter Verwendung der Clientdaten und der Cross-Chain-Daten unabhängig von dem Ziel-Blockchain-Netzwerk ausführt; und
Zurückgeben (443) des Ergebnisses durch den Smart Contract-Dienstanbieter an den Client.

2. Computerimplementiertes Verfahren nach Anspruch 1, wobei die Cross-Chain-Daten des einen oder mehrerer Blockchain-Netzwerke (316, 318, 320) ferner zielgerichtete Cross-Chain-Daten (a), die von dem Ziel-Blockchain-Netzwerk (306, 410) erhalten wurden, und private Cross-Chain-Daten (b), die von einem privaten Blockchain-Netzwerk (316) erhalten wurden, aufweisen.

3. Computerimplementiertes Verfahren nach einem der Ansprüche 1 oder 2, wobei die Smart Contract-Rechenlogiken für das Betreiben der Cross-Chain-Daten vom Client (302, 420) selbst entworfen werden.

4. Computerimplementiertes Verfahren nach einem der Ansprüche 1 oder 2, ferner umfassend das Nachweisen, dass die TEE (310) eine virtuelle Maschine umfasst, die betreibbar ist, um die Rechenlogik des Smart Contracts in der Anforderung zum Betreiben von Cross-Chain-Daten auszuführen, durch den Smart Contract-Dienstanbieter (308, 430) gegenüber dem Client (302, 420).

5. Computerimplementiertes Verfahren nach Anspruch 1, ferner umfassend ein oder mehrere von:
vor dem Empfangen (414) der Anforderung für das Betreiben von Cross-Chain-Daten von dem Client (302, 420), Nachweisen durch den Smart Contract-Dienstanbieter (308, 430) gegenüber dem Client, dass der Smart Contract-Dienstanbieter die TEE (310) beinhaltet;
Nachweisen, dass der Smart Contract-Dienstanbieter die TEE beinhaltet, durch den Smart Contract-Dienstanbieter gegenüber dem Datenbesuchs-Dienstanbieter, und Verifizieren, dass der Datenbesuchs-Dienstanbieter (312, 440) eine TEE beinhaltet, durch den Smart Contract-Dienstanbieter; und
Hochladen des Ergebnisses in das Ziel-Blockchain-Netzwerk (306, 410) durch den Smart-Contract-Dienstanbieter und, vor dem Hochladen des Ergebnisses in das Ziel-Blockchain-Netzwerk, Nachweisen des Smart-Contract-Dienstanbieters gegenüber dem Ziel-Blockchain-Netzwerk, dass der Smart-Contract-Dienstanbieter die TEE beinhaltet.

6. Computerimplementiertes Verfahren nach Anspruch 1, wobei
das Ergebnis von der TEE (310) unter Verwendung eines privaten Schlüssels signiert wird; und/oder
die Cross-Chain-Daten aus zwei oder mehr Blockchain-Netzwerken (316, 318, 320) erhalten werden.

7. Computerimplementiertes Verfahren nach Anspruch 6, wobei
das Ergebnis von der TEE (310) unter Verwendung eines privaten Schlüssels signiert wird, wobei das Verfahren ferner das Entschlüsseln des empfangenen Ergebnisses durch den Client unter Verwendung eines dem privaten Schlüssel entsprechenden öffentlichen Schlüssels umfasst.

8. Computerimplementiertes Verfahren nach Anspruch 1, ferner umfassend:
vor dem Senden der Anforderung zum Betreiben von Cross-Chain-Daten an den Smart Contract-Dienstanbieter (308, 430), Verschlüsseln der Anforderung zum Betreiben von Cross-Chain-Daten durch den Client (302, 420).

9. System, umfassend:
einen Client (302, 420), der einem Ziel-Blockchain-Netzwerk zugeordnet ist, umfassend:
einen oder mehrere Computer; und
einen oder mehrere computerlesbare Speicher, die mit dem einen oder mehreren Computern gekoppelt und mit Anweisungen, die von dem einen oder mehreren Computern ausgeführt werden können, dazu ausgelegt sind:
eine Anforderung zum Betreiben von Clientdaten aus dem Ziel-Blockchain-Netzwerk und Cross-Chain-Daten eines oder mehrerer Blockchain-Netzwerke (316, 318, 320), die sich von dem Ziel-Blockchain-Netzwerk unterscheiden, zu erzeugen, wobei die Anforderung zum Betreiben von Cross-Chain-Daten eine oder mehrere Smart-Contract-Rechenlogiken zum Betreiben der Cross-Chain-Daten umfasst, und wobei der Client keine Daten aus dem einen oder mehreren Blockchain-Netzwerken, die sich von dem Ziel-Blockchain-Netzwerk unterscheiden, lesen und mit ihnen Daten austauschen kann;
Clientdaten von der Ziel-Blockchain durch einen Smart Contract-Dienstanbieter (308, 430) abzurufen;
die Anforderung zum Betreiben von Cross-Chain-Daten an einen Smart Contract-Dienstanbieter (308, 430) zu senden, der eine vertrauenswürdige Berechnungsausführungsumgebung (TEE, 310) umfasst, wobei der Smart Contract-Dienstanbieter außerhalb des Ziel-Blockchain-Netzwerks ist;
eine Schnittstelle; und
eine vertrauenswürdige Berechnungsausführungsumgebung (TEE, 310), wobei die TEE umfasst:
einen oder mehrere Computer; und
einen oder mehrere computerlesbare Speicher, die mit dem einen oder mehreren Computern gekoppelt und mit Anweisungen, die von dem einen oder mehreren Computern ausgeführt werden können, dazu ausgelegt sind:
die Anforderung zum Betreiben von Cross-Chain-Daten eines oder mehrerer Blockchain-Netzwerke (316, 318, 320), die sich von dem Ziel-Blockchain-Netzwerk unterscheiden zu empfangen (414), das dem Ziel-Blockchain-Netzwerk zugeordnet ist;
eine Anforderung für die Cross-Chain-Daten an einen Datenbesuchs-Dienstanbieter (312, 440) zu senden (435);
die Cross-Chain-Daten vom Datenbesuchs-Dienstanbieter zu empfangen (439);
ein Ergebnis unter Verwendung der Clientdaten und der Cross-Chain-Daten zu erzeugen (441), wobei das Ergebnis durch die TEE erzeugt wird, die die Smart Contract-Rechenlogik unter Verwendung der Clientdaten und der Cross-Chain-Daten unabhängig von dem Ziel-Blockchain-Netzwerk ausführt; und
das Ergebnis an den Client zurückzugeben (443).

## Revendications

1. Procédé mis en œuvre par ordinateur (400), comprenant :
la génération, par un client (302, 420) associé à un réseau de chaîne de blocs cible (306, 410), d'une demande d'exploitation de données de client provenant du réseau de chaîne de blocs cible et de données de chaîne transversale d'un ou plusieurs réseaux de chaînes de blocs (316, 318, 320) différents du réseau de chaîne de blocs cible, dans lequel la demande d'exploitation de données de chaîne transversale comprend une ou plusieurs logiques de calcul de contrat intelligent permettant d'exploiter les données de chaîne transversale et dans lequel le client ne peut pas lire de données à partir desdits un ou plusieurs réseaux de chaînes de blocs différents du réseau de chaîne de blocs cible, ni échanger de données avec ceux-ci ;
l'envoi, par le client, de la demande d'exploitation de données de chaîne transversale à un fournisseur de service de contrat intelligent (308, 430) comprenant un environnement d'exécution de calcul de confiance TEE (310), dans lequel le fournisseur de service de contrat intelligent est hors du réseau de chaîne de blocs cible ;
la réception (414), par le fournisseur de service de contrat intelligent (308, 430), en provenance du client (302, 420) associé au réseau de chaîne de blocs cible (306, 410), la demande d'exploitation de données de chaîne transversale d'un ou plusieurs réseaux de chaînes de blocs (316, 318, 320) différents du réseau de chaîne de blocs cible ;
la récupération, par le fournisseur de service de contrat intelligent (308, 430), de données de client à partir de la chaîne de blocs cible ;
l'envoi (435), par le fournisseur de service de contrat intelligent à un fournisseur de service de visite de données (312, 440), d'une demande portant sur les données de chaîne transversale ;
la réception (439), par le fournisseur de service de contrat intelligent, des données de chaîne transversale en provenance du fournisseur de service de visite de données ;
la génération (441), par le TEE, d'un résultat à l'aide des données de client et des données de chaîne transversale, dans lequel le résultat est généré par exécution par le TEE de la logique de calcul de contrat intelligent à l'aide des données de client et des données de chaîne transversale, indépendamment du réseau de chaîne de blocs cible ; et
le renvoi (443), par le fournisseur de service de contrat intelligent, du résultat au client.

2. Procédé mis en œuvre par ordinateur selon la revendication 1, dans lequel les données de chaîne transversale desdits un ou plusieurs réseaux de chaînes de blocs (316, 318, 320) comprennent en outre des données de chaîne transversale cibles (a) obtenues à partir du réseau de chaîne de blocs cible (306, 410) et des données de chaîne transversale privées (b) obtenues à partir d'un réseau de chaîne de blocs privé (316).

3. Procédé mis en œuvre par ordinateur selon l'une quelconque des revendications 1 ou 2, dans lequel la logique de calcul de contrat intelligent permettant d'exploiter les données de chaîne transversale est auto-conçue par le client (302, 420).

4. Procédé selon la revendication 1 ou 2, comprenant en outre la fourniture, par le fournisseur de service de contrat intelligent (308, 430) au client (302, 420), d'une preuve que le TEE (310) comprend une machine virtuelle utilisable pour exécuter la logique de calcul de contrat intelligent dans la demande d'exploitation de données de chaîne transversale.

5. Procédé selon la revendication 1, mis en œuvre par ordinateur, comprenant en outre une ou plusieurs des étapes suivantes :
avant la réception (414) de la demande d'exploitation de données de chaîne transversale en provenance du client (302, 420), la fourniture, par le fournisseur de service de contrat intelligent (308, 430) au client, de la preuve que le fournisseur de service de contrat intelligent comporte le TEE (310) ;
la fourniture, par le fournisseur de service de contrat intelligent au fournisseur de service de visite de données, de la preuve que le fournisseur de service de contrat intelligent comporte le TEE, et la vérification, par le fournisseur de service de contrat intelligent, du fait que le fournisseur de service de visite de données (312, 440) comporte un TEE ; et
le téléchargement, par le fournisseur de service de contrat intelligent, du résultat vers le réseau de chaîne de blocs cible (306, 410) et, avant le téléchargement du résultat vers le réseau de chaîne de blocs cible, la fourniture, par le fournisseur de service de contrat intelligent au réseau de chaîne de blocs cible, de la preuve que le fournisseur de service de contrat intelligent comporte le TEE.

6. Procédé mis en œuvre par ordinateur selon la revendication 1, dans lequel
le résultat est signé par le TEE (310) à l'aide d'une clé privée ; et/ou
les données de chaîne transversale sont obtenues à partir de deux ou réseaux de chaînes de blocs (316, 318, 320) ou plus.

7. Procédé mis en œuvre par ordinateur selon la revendication 6, dans lequel
le résultat est signé par le TEE (310) à l'aide d'une clé privée, le procédé comprenant en outre le décryptage, par le client, du résultat reçu à l'aide d'une clé publique correspondant à la clé privée.

8. Procédé mis en œuvre par ordinateur selon la revendication 1, comprenant en outre :
avant l'envoi de la demande d'exploitation de données de chaîne transversale au fournisseur de service de contrat intelligent (308, 430), le cryptage, par le client (302, 420), de la demande d'exploitation de données de chaîne transversale.

9. Système comprenant :
un client (302, 420) associé à un réseau de chaîne de blocs cible, comprenant :
un ou plusieurs ordinateurs ; et
une ou plusieurs mémoires lisibles par ordinateur couplées auxdits un ou plusieurs ordinateurs et configurées pour contenir des instructions exécutables par lesdits un ou plusieurs ordinateurs pour :
générer une demande d'exploitation de données de client provenant du réseau de chaîne de blocs cible et de données de chaîne transversale d'un ou plusieurs réseaux de chaînes de blocs (316, 318, 320) différents du réseau de chaîne de blocs cible, dans lequel la demande d'exploitation de données de chaîne transversale comprend une ou plusieurs logiques de calcul de contrat intelligent permettant d'exploiter les données de chaîne transversale et dans lequel le client ne peut pas lire de données à partir desdits un ou plusieurs réseaux de chaînes de blocs différents du réseau de chaîne de blocs cible, ni échanger de données avec ceux-ci ;
récupérer, par un fournisseur de service de contrat intelligent (308, 430), de données de client à partir de la chaîne de blocs cible ;
envoyer la demande d'exploitation de données de chaîne transversale à un fournisseur de service de contrat intelligent (308, 430) comprenant un environnement d'exécution de calcul de confiance (TEE, 310), dans lequel le fournisseur de service de contrat intelligent est hors du réseau de chaîne de blocs cible ;
une interface ; et
un environnement d'exécution de calcul de confiance (TEE, 310), dans lequel le TEE comprend :
un ou plusieurs ordinateurs ; et
une ou plusieurs mémoires lisibles par ordinateur couplées auxdits un ou plusieurs ordinateurs et configurées pour contenir des instructions exécutables par lesdits un ou plusieurs ordinateurs pour :
recevoir (414), en provenance du client associé au réseau de chaîne de blocs cible, la demande d'exploitation de données de chaîne transversale d'un ou plusieurs réseaux de chaînes de blocs (316, 318, 320) différents du réseau de chaîne de blocs cible ;
envoyer (435) à un fournisseur de service de visite de données (312, 440), une demande portant sur les données de chaîne transversale ;
recevoir (439) les données de chaîne transversale en provenance du fournisseur de service de visite de données ;
générer (441) un résultat à l'aide des données de client et des données de chaîne transversale, dans lequel le résultat est généré par exécution par le TEE de la logique de calcul de contrat intelligent à l'aide des données de client et des données de chaîne transversale, indépendamment du réseau de chaîne de blocs cible ; et
renvoyer (443) le résultat au client.
